# EUROPEAN PATENT APPLICATION

(11) **EP 2 924 902 A1**
(43) Date of publication of application: **30.09.2015**
(21) Application number: 13856976.9
(22) Date of filing: 09.08.2013
(51) Int. Cl.: H04J 14/02

(54) **METHOD AND SYSTEM FOR TUNING OPERATING WAVELENGTH**

(30) Priority: 23.11.2012 CN 201210480963
(71) Applicant: ZTE Corporation, Shenzhen City, Guangdong Province 518057 (CN)
(72) Inventor: ZHANG, Weiliang, Shenzhen Guangdong Province 518057 (CN); GENG, Dan, Shenzhen Guangdong Province 518057 (CN); MA, Zhuang, Shenzhen Guangdong Province 518057 (CN); ZHANG, Dezhi, Shenzhen Guangdong Province 518057 (CN)
(74) Representative: Novagraaf Technologies
(86) International application number: PCT/CN2013/081202
(87) International publication number: WO 2014/079233

(57) **Abstract**

Provided are a method and system for tuning an operating wavelength. In the method, an OLT, or one or more ports of the OLT acquiring an operating wavelength value that selected by an ONU from a value range of an operating wavelength to be tuned, wherein the ONU is managed by the OLT or by the one or more ports of the OLT; the OLT determining the OLT or at least one port of the OLT managing the ONU according to the operating wavelength value acquired, or the one or more ports of the OLT determining at least one of the one or more port of OLT managing the ONU according to the operating wavelength value acquired. By the technical solution of the invention, the time consumed for tuning the operating wavelength is shortened, and service quality of the passive optical network is improved.

## Description

### TECHNICAL FIELD

The present invention relates to the communications field, and in particular to a method and system for tuning an operating wavelength.

### BACKGROUND

With the rapid development of network technologies, network can be used to transmit large amounts of services, such as voice, data and video. Therefore, requirements on the bandwidth are improved constantly, and a Passive Optical Network (PON) appears in time under the requirements.

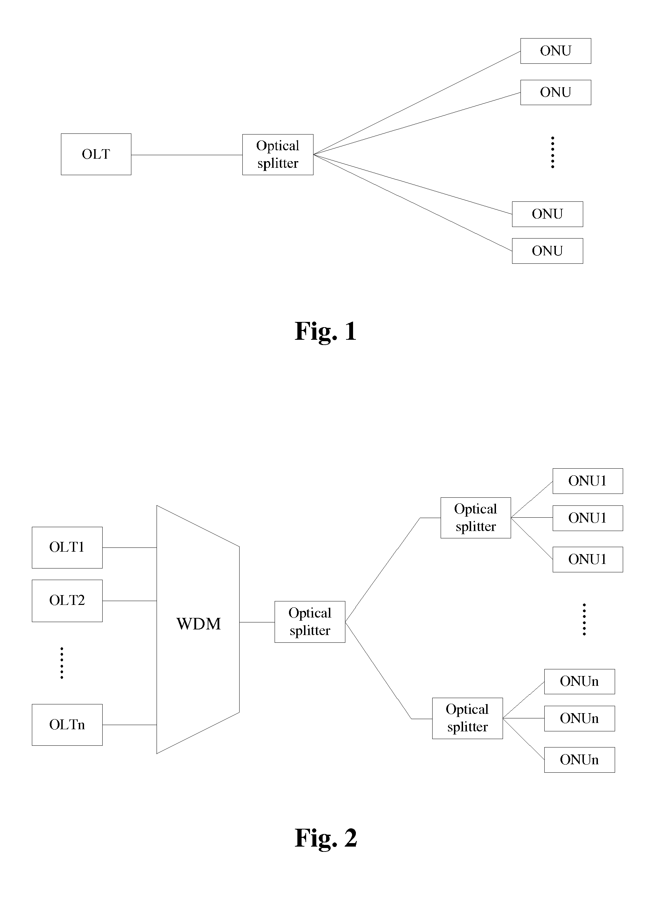

Fig. 1 is a schematic diagram of a topology structure of a PON system according to the related art. As shown in Fig. 1, the PON system is usually composed of an Optical Line Terminal (OLT) on local side, and an Optical Network Unit (ONU) and an Optical Distribution Network (ODN) on user side. And the PON system usually adopts a network structure of point-to-multipoint. The ODN consists of passive optical devices such as single mode fibers, an optical splitter and an optical connector. The ODN provides optical transmission medium for a physical connection between the OLT and the ONU. At present, the PON technology mainly includes a time division multiplexing (TDM) PON system, a Wavelength Division Multiplexing (WDM) PON system, an Orthogonal Frequency Division Multiplexing (OFDM) PON system and a mixed PON system. The mixed PON system may include a wavelength division and time division mixed PON system, a frequency division and time division mixed PON system as well as a wavelength division and time division mixed PON system.

In the WDM-PON system, there are multiple optical transmitters with different wavelengths at the OLT, and the optical wavelength of each optical transmitter is respectively λd1, λd2, ..., λdn, wherein the λd1 is the wavelength used for sending downlink data when the OLT communicates with a first ONU, and λd2 is the wavelength used for sending downlink data when the OLT communicates with a second ONU, ..., and λdn is the wavelength used for sending downlink data when the OLT communicates with an nth ONU; the transmitting wavelength of a transmitter at the ONU is different from transmitting wavelengths of transmitters at other ONUs, for example: the transmitting wavelength of a transmitter for sending uplink data to the OLT by the first ONU is λu1, and the transmitting wavelength of a transmitter for sending uplink data to the OLT by the second ONU is λu2, ..., and the transmitting wavelength of a transmitter for sending uplink data to the OLT by the nth ONU is λun; by using the above-mentioned techniques, the OLT can send downlink data to all the ONUs at the same time, and each ONU also can send uplink data at the same time, i.e., the OLT and ONU using point-to-point structure on an optical channel.

In the OFDM-PON system, there are multiple different sub-carriers at the OLT, and each sub-carrier is respectively C1, C2, ..., Cn, and each sub-carrier is orthogonal, and the OLT modulates downlink data which is sent to the first ONU to a first sub-carrier (or modulating to the first sub-carrier and other sub-carriers), and the OLT modulates downlink data which is sent to the second ONU to a second sub-carrier (or modulating to the second sub-carrier and other sub-carriers), ..., and the OLT modulates downlink data which is sent to the nth ONU to an nth sub-carrier (or modulating to the nth sub-carrier and other sub-carriers), and sub-carriers used by downlink data sent to different ONUs have no intersection. That is, different ONUs use different sub-carriers, and the sub-carriers for sending uplink data to the OLT at the ONU are the same as the sub-carriers for sending downlink data to a current ONU. By using the above-mentioned techniques, the OLT can send downlink data to all the ONUs at the same time, and each ONU also can send uplink data at the same time, i.e., the OLT and ONU using a point-to-point structure on the optical channel.

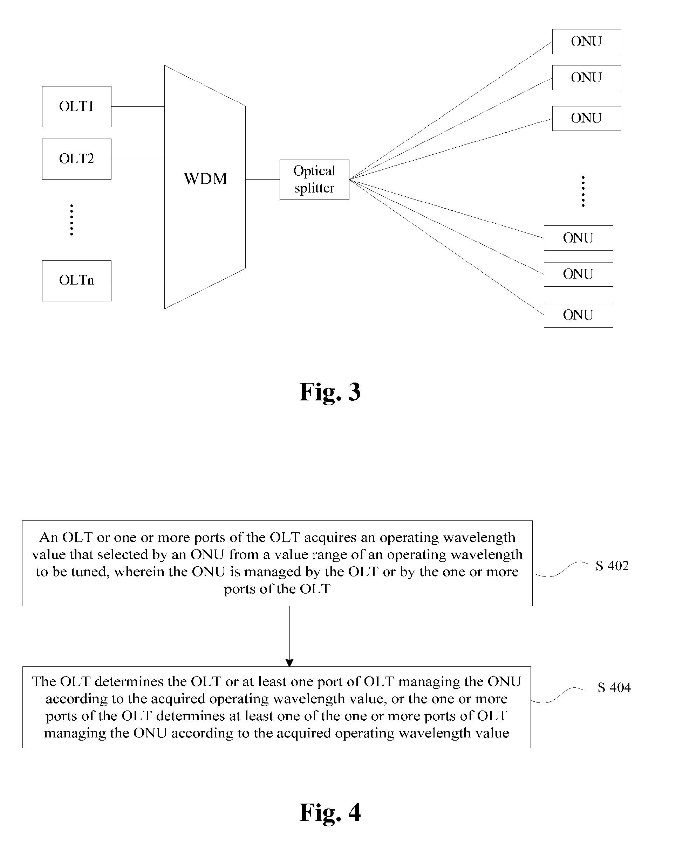

Fig. 2 is a schematic diagram of a topology structure of a wavelength division and time division mixed PON system according to the related art. Fig. 3 is a schematic diagram of a topology structure of a frequency division and time division mixed PON system according to the related art. As shown in Fig. 2 and Fig. 3, each OLT manages a group of ONUs, and uplink wavelengths for sending uplink data of the group of ONUs in the wavelength division and time division mixed PON system are the same, and downlink wavelengths for receiving downlink data are also the same. Moreover, sub-carriers or sub-carrier groups for sending uplink data of the group of ONUs in the frequency division and time division mixed PON system are the same, and sub-carriers or sub-carrier groups for receiving downlink data are also the same. Different ONUs in one group of ONUs transmit uplink data in a time division multiplexing manner. Downlink wavelengths (sub-carriers or sub-carrier groups) of different OLTs are different, and uplink wavelengths (sub-carriers or sub-carrier groups) used by each group of ONUs which are managed by different OLTs are also different.

In WDM-PON and mixed PON systems, a time division PON system in the mixed PON system may be one of the followings: a Gigabit-Capable Passive Optical Network (GPON) system, an Ethernet Passive Optical Network (EPON), a 10-Gigabit-capable passive optical network (XG-PON) system, a 10-Gigabit-capable EPON system. Considering purposes of the load balance, power saving and realizing protection switching of the ONU, thus the ONU needs to adjust the operating wavelength. If the wavelength adjustment of the ONU is completed through an OLT command, then the OLT needs to inquire wavelength tuning capability of the ONU, which thus increases an information interaction process between the OLT and the ONU. When realizing protection switching, if the OLT does not inquire the wavelength tuning capability of the ONU in advance, and commands all ONUs needing to implement protection switching to tune to another wavelength for operation, it may cause that some of the ONUs cannot complete wavelength tuning, that is, protection switching cannot be realized since wavelength tuning capability of each ONU is different.

### SUMMARY

The embodiments of the present invention provide a method and system for tuning an operating wavelength, so as to at least solve the problem that an OLT cannot quickly complete wavelength tuning of an ONU in the case that the OLT cannot know the wavelength tuning capability of the ONU in advance in the related art.

According to one aspect of the embodiments of the present invention, a method for tuning an operating wavelength is provided.

The method for tuning operating wavelength according to the the embodiments of present invention includes: an OLT or one or more ports of the OLT acquiring an operating wavelength value that selected by an ONU from a value range of an operating wavelength to be tuned, wherein the ONU is managed by the OLT or by the one or more ports of the OLT; the OLT determining the OLT or the at least one port of the OLT managing the ONU according to the acquired operating wavelength value, or the one or more ports of the OLT determining at least one of the one or more ports of OLT managing the ONU according to the acquired operating wavelength value.

In an example embodiment,, the OLT or the one or more ports of the OLT acquiring the operating wavelength value that selected by an ONU from the value range of the operating wavelength to be tuned includes: the ONU receiving a notification message from the OLT or the one or more ports of the OLT, wherein the notification message carries the value range of the operating wavelength to be tuned as well as a bandwidth used for reporting the operating wavelength value and allocated to the ONU by the OLT or the one or more ports of the OLT; and the ONU selecting the operating wavelength value in the value range of the operating wavelength to be tuned, and reporting the operating wavelength value in a allocated bandwidth.

In an example embodiment, after the ONU selects the operating wavelength value from the value range of the operating wavelength to be tuned, and reports the operating wavelength value in the allocated bandwidth, the method further includes: the ONU tuning a current operating wavelength to be the operating wavelength value.

In an example embodiment, the OLT determining an OLT or the at least one port of the OLT managing the ONU according to an acquired operating wavelength value includes: determining, by the OLT, the OLT or the at least one port of the OLT corresponding to the operating wavelength value and managing the ONU; and notifying, by the OLT, identification information of the ONU to a determined OLT or the at least one determined port of the OLT managing the ONU, wherein the determined OLT or the at least one determined port of the OLT managing the ONU allocates the bandwidth to the ONU according to the identification information of the ONU.

In an example embodiment, the one or more ports of the OLT determining at least one of the one or more ports of the OLT managing the ONU according to an acquired operating wavelength value includes: determining, by the one or more ports of the OLT, at least one of the one or more ports of the OLT corresponding to the operating wavelength value and managing the ONU; and notifying, by the one or more ports of the OLT, identification information of the ONU to a determined port of the OLT managing the ONU, wherein the determined port of the OLT managing the ONU allocates the bandwidth to the ONU according to the identification information of the ONU.

In an example embodiment, before the OLT or the one or more ports of the OLT acquiring the operating wavelength value that selected by an ONU from the value range of the operating wavelength to be tuned, the method further includes: the ONU executing distance measurement on all wavelengths in a wavelength tuning range of the ONU, and saving a distance measurement result; and, the ONU tuning a current operating wavelength to be the operating wavelength value, and updating a current balance time delay value to be a balance time delay value corresponding to the operating wavelength value.

According to another aspect of the embodiments of the present invention, a system for tuning an operating wavelength is provided.

The system for tuning an operating wavelength according to the embodiments of the present invention includes: an OLT; the OLT includes: an acquisition module, configured to acquire an operating wavelength value that selected by an ONU from a value range of an operating wavelength to be tuned, wherein the ONU is managed by the OLT or by the one or more ports of the OLT; and a determination module, configured to determine the OLT managing the ONU or at least one of the one or more ports of the OLT managing the ONU according to the acquired operating wavelength value.

In an example embodiment, the above-mentioned system further includes: the ONU; the ONU includes: a reception module, configured to receive a notification message from the OLT or the one or more ports of the OLT, wherein the notification message carries the value range of the operating wavelength to be tuned as well as a bandwidth used for reporting the operating wavelength value and allocated to the ONU by the OLT or the one or more ports of the OLT; and a reporting module, configured to select the operating wavelength value from the value range of the operating wavelength to be tuned, and report the operating wavelength value in the allocated bandwidth; and a processing module, configured to tune a current operating wavelength to be the operating wavelength value, or continue to maintain the current operating wavelength.

In an example embodiment, the determination module includes: a determination component, configured to determine the OLT or at least one of the one or more ports of the OLT corresponding to the operating wavelength value and managing the ONU; and a notification component, configured to notify identification information of the ONU to a determined OLT or a determined port of the OLT managing the ONU, wherein the determined OLT or the determined port of the OLT managing the ONU allocates the bandwidth to the ONU according to the identification information of the ONU.

In an example embodiment, the above-mentioned ONU further includes: a distance measurement module, configured to execute distance measurement on all wavelengths in a wavelength tuning range of the ONU, and save a distance measurement result.

In the embodiments of the present invention, the OLT is used to acquire the operating wavelength value that selected by the ONU managed by the OLT or the one or more ports of the OLT from the value range of the operating wavelength to be tuned, or, the one or more ports of the OLT are used to acquire the operating wavelength value that selected by the ONU managed by the OLT or the one or more ports of the OLT from the value range of the operating wavelength to be tuned; the OLT determines the OLT or the at least one port of OLT managing the ONU according to the acquired operating wavelength value, or the one or more ports of the OLT determines at least one of the one or more ports of OLT managing the ONU according to the acquired operating wavelength value. The above-mentioned solution solves the problem in the related art that the OLT cannot quickly complete wavelength tuning of an ONU in the case that the OLT cannot know the wavelength tuning capability of the ONU in advance, and further the ONU may independently select a tuned wavelength according to its own wavelength tuning capability and a tunable wavelength range which is allocated by the OLT, and it shortens the time requiring to be consumed by the ONU for tuning the operating wavelength, and improves the quality of service of the passive optical network.

### BRIEF DESCRIPTION OF THE DRAWINGS

The drawings illustrated here provided a further understanding of the present invention and form a part of the present application. The exemplary embodiments and the description thereof are used to explain the present invention without unduly limiting the scope of the present invention, wherein:
Fig. 1 is a schematic diagram of a topology structure of a PON system according to the related art;
Fig. 2 is a schematic diagram of a topology structure of a wavelength division and time division mixed PON system according to the related art;
Fig. 3 is a schematic diagram of a topology structure of a frequency division and time division mixed PON system according to the related art;
FIG. 4 is a flowchart of a method for tuning an operating wavelength according to an embodiment of the present invention;
FIG. 5 is a flowchart of a method for tuning an operating wavelength according to an example embodiment of the present invention;
FIG. 6 is a structural diagram of a system for tuning an operating wavelength according to an embodiment of the present invention; and
FIG. 7 is a structural diagram of a system for tuning an operating wavelength according to an example embodiment of the present invention.

### DETAILED DESCRIPTION OF EMBODIMENTS

The present invention will be described hereinafter in detail with reference to the drawings and in conjunction with the embodiments. It needs to be noted that the embodiments of the present application and the features in the embodiments can be combined with each other if no conflict exists.

FIG. 4 is a flowchart of a method for tuning an operating wavelength according to an embodiment of the present invention. As shown in Fig. 4, the method may include the processing steps as follows.

Step S402: an OLT or one or more ports of the OLT acquires an operating wavelength value that selected by an ONU from a value range of an operating wavelength to be tuned, wherein the ONU is managed by the OLT or by the one or more ports of the OLT; and
step S404: the OLT determines the OLT or at least one port of OLT managing the ONU according to the acquired operating wavelength value, or the one or more ports of the OLT determines at least one of the one or more ports of OLT managing the ONU according to the acquired operating wavelength value.

In the related art, the OLT cannot quickly complete wavelength tuning of the ONU in the case that the OLT cannot know the wavelength tuning capability of the ONU in advance. By using the method as shown in Fig. 4, the OLT is used to acquire the operating wavelength value that selected by the ONU managed by the OLT or the one or more ports of the OLT from the value range of the operating wavelength to be tuned, or, the one or more ports of the OLT are used to acquire the operating wavelength value that selected by the ONU managed by the OLT or the one or more ports of the OLT from the value range of the operating wavelength to be tuned; the OLT determines the OLT or the at least one port of the OLT managing the ONU according to the acquired operating wavelength, or the one or more ports of the OLT determines at least one of the one or more ports of the OLT managing the ONU according to the acquired operating wavelength value. The above-mentioned solution solves the problem in the related art that the OLT cannot quickly complete wavelength tuning of an ONU in the case that the OLT cannot know the wavelength tuning capability of the ONU in advance, and further the ONU may independently select a tuned wavelength according to its own wavelength tuning capability and a tunable wavelength range which is allocated by the OLT, and it shortens the time requiring to be consumed by the ONU for tuning the operating wavelength, and improves the quality of service of the passive optical network.

In an example implementation process, the above-mentioned OLT may be a master OLT during operating or a slave OLT for protection switch.

In an example embodiment, in step S402, the OLT or the one or more ports of the OLT acquiring the operating wavelength value that selected by an ONU from the value range of the operating wavelength to be tuned may include the following steps:
step S1: the ONU receives a notification message from the OLT or the one or more ports of the OLT, wherein the notification message carries the value range of the operating wavelength to be tuned as well as a bandwidth used for reporting the operating wavelength value and allocated to the ONU by the OLT or the one or more ports of the OLT; and
step S2: the ONU selects the operating wavelength value from the value range of the operating wavelength to be tuned, and reports the operating wavelength value in the allocated bandwidth.

In an example embodiment, the OLT notifies an ONU of the operating wavelength range which may be tuned, and allocates the bandwidth to the ONU for reporting a selected operating wavelength; after receiving the above-mentioned information, the ONU selects the operating wavelength value in the tuning operating wavelength range notified by the above-mentioned OLT according to its own wavelength tuning capacity, and reports the selected operating wavelength value to the OLT in the above-mentioned bandwidth allocation.

In an example embodiment, in step S2, after the ONU selects the operating wavelength value from the value range of the operating wavelength to be tuned, and reports the operating wavelength value in the allocated bandwidth; the method further includes the following steps:
step S3: the ONU tunes a current operating wavelength to be an operating wavelength value.

In an example embodiment, in step S404, the OLT determines the OLT or the at least one port of the OLT managing the ONU according to the acquired operating wavelength value may include the following steps:
step S4: the OLT determines the OLT or the at least one port of the OLT corresponding to the operating wavelength value and managing the ONU; and
step S5: the OLT notifies identification information of the ONU to a determined OLT or at least one determined port of the OLT managing the ONU, wherein the determined OLT or the at least one determined port of the OLT managing the ONU allocates the bandwidth to the ONU according to the identification information of the ONU.

In an example embodiment, in step S404, the one or more ports of the OLT determines at least one of the one or more ports of the OLT managing the ONU according to the acquired operating wavelength value may include the following steps:
step S6: the one or more ports of the OLT determines the at least one of the one or more ports of the OLT corresponding to the operating wavelength value and managing the ONU; and
step S7: the one or more ports of the OLT notifies identification information of the ONU to at least one determined port of the OLT managing the ONU, wherein the at least one determined port of the OLT managing the ONU allocates the bandwidth to the ONU according to the identification information of the ONU.

In an example embodiment, after receiving the selected operating wavelength value reported by the ONU, the OLT notifies a identification value of the ONU to the OLT corresponding to the operating wavelength value, and the OLT corresponding to the operating wavelength value allocates the bandwidth to the ONU, and the above-mentioned ONU uses an updated EqD value to respond to the above-mentioned bandwidth allocation.

In an example embodiment, in step S402, before the OLT or the one or more ports of the OLT acquires the operating wavelength value that selected by the ONU from the value range of the operating wavelength to be tuned, the method may include the following steps:
step S8: the ONU executes distance measurement on all wavelengths in a wavelength tuning range of the ONU, and saves a distance measurement result; and
step S9: the ONU tunes a current operating wavelength to be the operating wavelength value, and updates a current balance time delay value to be a balance time delay value corresponding to the operating wavelength value.

In an example embodiment, before the OLT notifies the ONU of the operating wavelength range which may be tuned, the ONU completes distance measurement at all wavelengths within its own wavelength tuning capability, and stores distance measurement results; after the ONU selects the operating wavelength, the ONU tunes the operating wavelength of its own to be the above-mentioned operating wavelength, and updates a local balance time delay value (EqD) to be an EqD value corresponding to the above-mentioned operating wavelength.

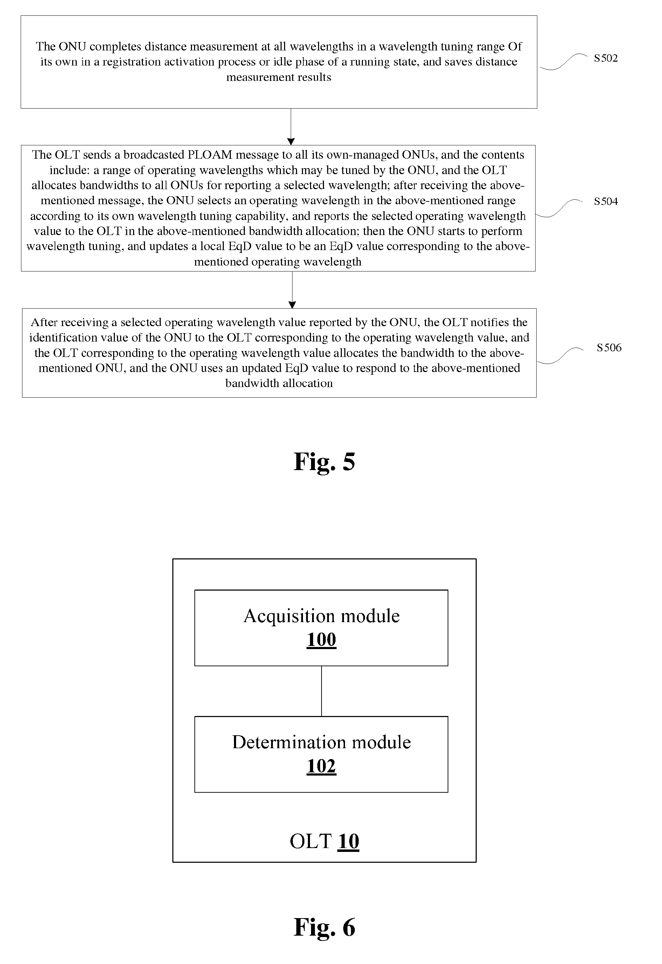

The following further describes the above-mentioned example implementation process in combination with the example embodiment shown in Fig. 5.

FIG. 5 is a flowchart of a method for tuning an operating wavelength according to an example embodiment of the present invention. When considering load balance, power saving and protection switch, the ONU needs to tune the operating wavelength; as shown in Fig. 5, the OLT and ONU may adopt the following steps to complete the wavelength tuning of the ONU:
step S502: the ONU completes distance measurement at all wavelengths in a wavelength tuning range of its own in a registration activation process or idle phase of a running state, and saves distance measurement results;
step S504: the OLT (master or slave) sends a broadcasted physical layer operation administration and maintenance (PLOAM) message to all its own managed ONUs, and the contents include: a range of operating wavelengths which may be tuned by the ONU, and the OLT allocates bandwidths to all ONUs for reporting a selected wavelength; after receiving the above-mentioned message, the ONU selects an operating wavelength in the above-mentioned range according to its own wavelength tuning capability, and reports the selected operating wavelength value to the OLT in the above-mentioned bandwidth allocation; then the ONU starts to execute wavelength tuning, and updates a local EqD value to be an EqD value corresponding to the above-mentioned operating wavelength;

In the example embodiment, when considering load balance and power saving, the OLT in the step may be a master OLT in operating; and when considering protection switch, the OLT in the step may be a slave OLT. If the slave OLT and the master OLT are different, then the slave OLT adjusts a operating wavelength of its own to be an operating wavelength of the master OLT, and the slave OLT sends a broadcast PLOAM message to all ONUs managed by the master OLT.

In the example embodiment, the step uses a broadcast PLOAM message, and other example embodiments also may use the following manners for processing:
manner 1: the OLT may be used to respectively send a unicast PLOAM message to all ONUs managed thereof;
manner 2: the OLT may be used to transmit the operating wavelength range which may be tuned to the ONU through an ONU Management and Control Interface (OMCI); and
manner 3: the OLT may be used to transmit the operating wavelength range which may be tuned to the ONU through bandwidth allocation.

Step S506: after receiving a selected operating wavelength value reported by the ONU, the OLT notifies the identification value of the ONU to the OLT corresponding to the operating wavelength value, and the OLT corresponding to the operating wavelength value allocates the bandwidth to the above-mentioned ONU, and the ONU uses an updated EqD value to respond to the above-mentioned bandwidth allocation.

FIG. 6 is a structural diagram of a system for tuning an operating wavelength according to an embodiment of the present invention. As shown in Fig. 6, the system for tuning the operating wavelength may comprise: an OLT **10**; the OLT **10** may include: an acquisition module **100** is configured to acquire an operating wavelength value that selected by an ONU from a value range of an operating wavelength to be tuned, wherein the ONU is managed by the OLT or by one or more ports of the OLT; and a determination module **102** is configured to determine the OLT managing the ONU or at least one of the one ore more ports of the OLT managing the ONU according to the acquired operating wavelength value.

By using the system as shown in Fig. 6, it solves the problem in the related art that the OLT cannot quickly complete wavelength tuning of the ONU in the case that the OLT cannot know the wavelength tuning capability of the ONU in advance, and further the ONU may independently select a tuned wavelength according to its own wavelength tuning capability and a tunable wavelength range which is allocated by the OLT, and it shortens the time requiring to be consumed by the ONU for tuning the operating wavelength, and improves the quality of service of the passive optical network.

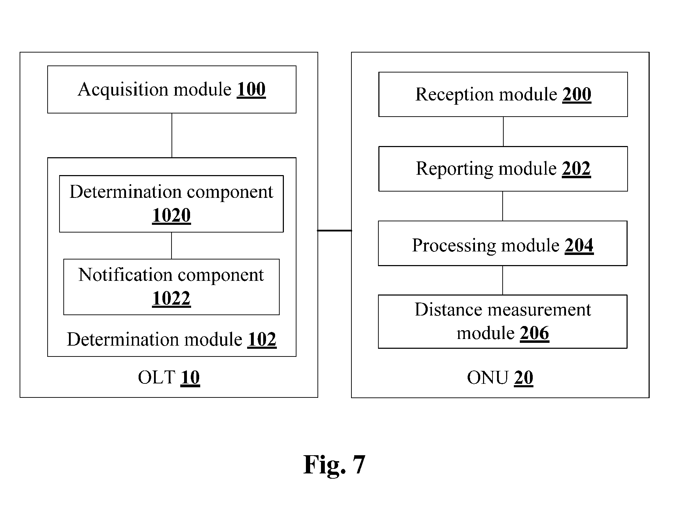

In an example embodiment, as shown in Fig. 7, the above-mentioned system may further include: the ONU **20**; the ONU **20** may include: a reception module **200** is configured to receive a notification message from the OLT or the one or more ports of the OLT, wherein the notification message carries the value range of the operating wavelength to be tuned as well as a bandwidth used for reporting the operating wavelength value and allocated to the ONU by the OLT or the one or more ports of the OLT; and a reporting module **202** is configured to select the operating wavelength value from the value range of the operating wavelength to be tuned, and report the operating wavelength value in the allocated bandwidth; and a processing module **204** is configured to tune a current operating wavelength to be the operating wavelength value, or continue to maintain the current operating wavelength.

In an example embodiment, as shown in Fig. 7, the above-mentioned determination module **102** may include: a determination component **1020** is configured to determine the OLT or the at least one of the one or more ports of the OLT corresponding to the operating wavelength value and managing the ONU; and a notification component **1022** is configured to notify identification information of the ONU to a determined OLT or at least one determined port of the OLT managing the ONU, wherein the determined OLT or the at least one of the one or more ports of the OLT managing the ONU allocates the bandwidth to the ONU according to the identification information of the ONU.

In an example embodiment, as shown in Fig. 7, the above-mentioned ONU **20** may further include: a distance measurement module **206** is configured to execute distance measurement on all wavelengths in a wavelength tuning range of the ONU, and save a distance measurement result.

It can be seen from the above description that the above-mentioned embodiments realize the following technical effects (it needs to be noted that these effects are effects which can be achieved by certain example embodiments): The above-mentioned solution solves the problem in the related art that the OLT cannot quickly complete wavelength tuning of the ONU in the case that the OLT cannot know the wavelength tuning capability of the ONU in advance, and further the ONU may independently select a tuned wavelength according to its own wavelength tuning capability and a tunable wavelength range which is allocated by the OLT, and it shortens the time requiring to be consumed by the ONU for tuning the operating wavelength, and improves the quality of service of an passive optical network.

Obviously, those skilled in the art shall understand that the above-mentioned components and steps of the present invention can be realized by using general purpose calculating device, can be integrated in one calculating device or distributed on a network which consists of a plurality of calculating devices. Alternatively the components and the steps of the present invention can be realized by using the executable program code of the calculating device. Consequently they can be stored in the storing device and executed by the calculating device, or they are made into integrated circuit component respectively, or a plurality of components or steps thereof are made into one integrated circuit component. In the way, the present invention is not restricted to any particular hardware and software combination.

Above description is only to illustrate the preferred embodiments but not to limit the present invention. Various alterations and changes to the present invention are apparent to those skilled in the art. The protective scope defined in the present invention shall comprise any modification, equivalent substitution and improvement within the spirit and principle of the present invention.

## Claims

1. A method for tuning an operating wavelength, **characterized by** comprising:
an optical line terminal, OLT, or one or more ports of the OLT acquiring an operating wavelength value that selected by an optical network unit, ONU, from a value range of an operating wavelength to be tuned, wherein the ONU is managed by the OLT or by the one or more ports of the OLT;
the OLT determining the OLT or at least one port of the OLT managing the ONU according to the operating wavelength value acquired, or the one or more ports of the OLT determining at least one of the one or more ports of OLT managing the ONU according to the operating wavelength value acquired.

2. The method according to claim 1, **characterized in that** the OLT or the one or more ports of the OLT acquiring the operating wavelength value that selected by the ONU from the value range of the operating wavelength to be tuned comprises:
the ONU receiving a notification message from the OLT or the one or more ports of the OLT, wherein the notification message carries the value range of the operating wavelength to be tuned as well as a bandwidth used for reporting the operating wavelength value and allocated to the ONU by the OLT or the one or more ports of the OLT; and
the ONU selecting the operating wavelength value from the value range of the operating wavelength to be tuned, and reporting the operating wavelength value in the bandwidth allocated.

3. The method according to claim 2, **characterized in that** after the ONU selects the operating wavelength value from the value range of the operating wavelength to be tuned, and reports the operating wavelength value in the bandwidth allocated, the method further comprises:
the ONU tuning a current operating wavelength to be the operating wavelength value.

4. The method according to claim 1, **characterized in that** the OLT determining the OLT or the at least one port of the OLT managing the ONU according to the operating wavelength value acquired comprises:
determining, by the OLT, the OLT or the at least one port of the OLT corresponding to the operating wavelength value and managing the ONU; and
notifying, by the OLT, identification information of the ONU to a determined OLT or the at least one determined port of the OLT managing the ONU, wherein the determined OLT or at least one determined port of the OLT managing the ONU allocates a bandwidth to the ONU according to the identification information of the ONU.

5. The method according to claim 1, **characterized in that** the one or more ports of the OLT determining at least one of the one or more ports of the OLT managing the ONU according to the operating wavelength value acquired comprises:
determining, by the one or more ports of the OLT, at least one of the one or more ports of the OLT corresponding to the operating wavelength value and managing the ONU; and
notifying, by the one or more ports of the OLT, identification information of the ONU to a determined port of the OLT managing the ONU, wherein the determined port of the OLT managing the ONU allocates a bandwidth to the ONU according to the identification information of the ONU.

6. The method according to claim 2, **characterized in that** before the OLT or the one or more ports of the OLT acquiring the operating wavelength value that selected by the ONU from the value range of the operating wavelength to be tuned, the method further comprises:
the ONU executing distance measurement on all wavelengths in a wavelength tuning range of the ONU, and saving a distance measurement result; and
the ONU tuning a current operating wavelength to be the operating wavelength value, and updating a current balance time delay value to be a balance time delay value corresponding to the operating wavelength value.

7. A system for tuning an operating wavelength, **characterized in that** the system comprises: an optical line terminal, OLT;
the OLT comprises:
an acquisition module, configured to acquire an operating wavelength value that selected by an optical network unit, ONU, from a value range of an operating wavelength to be tuned, wherein the ONU is managed by the OLT or by one or more ports of the OLT; and
a determination module, configured to determine the OLT managing the ONU or at least one of the one or more ports of the OLT managing the ONU according to the operating wavelength value acquired.

8. The system according to claim 7, **characterized in that** the system further comprises: the ONU;
the ONU comprises:
a reception module, configured to receive a notification message from the OLT or the one or more ports of the OLT, wherein the notification message carries the value range of the operating wavelength to be tuned as well as a bandwidth used for reporting the operating wavelength value and allocated to the ONU by the OLT or the one or more ports of the OLT; and
a reporting module, configured to select the operating wavelength value from the value range of the operating wavelength to be tuned, and report the operating wavelength value in the bandwidth allocated; and
a processing module, configured to tune a current operating wavelength to be the operating wavelength value, or continue to maintain the current operating wavelength.

9. The system according to claim 7, **characterized in that** the determination module comprises:
a determination component, configured to determine the OLT or at least one of the one or more ports of the OLT corresponding to the operating wavelength value and managing the ONU; and
a notification component, configured to notify identification information of the ONU to a determined OLT or a determined port of the OLT managing the ONU, wherein the determined OLT or the determined port of the OLT managing the ONU allocates a bandwidth to the ONU according to the identification information of the ONU.

10. The system according to claim 8, **characterized in that** the ONU further comprises:
a distance measurement module, configured to execute distance measurement on all wavelengths in a wavelength tuning range of the ONU, and save a distance measurement result.
